(19) Europäisches Patentamt
European Patent Office
Office européen des brevets

(11) **EP 3 483 512 A1**

(12) **EUROPEAN PATENT APPLICATION**
published in accordance with Art. 153(4) EPC

(43) Date of publication:
**15.05.2019 Bulletin 2019/20**

(21) Application number: **17823502.4**

(22) Date of filing: **14.06.2017**

(51) Int Cl.:
**F24D 19/10** *(2006.01)*   **F24D 12/02** *(2006.01)*
**F24D 17/02** *(2006.01)*

(86) International application number:
**PCT/CN2017/088311**

(87) International publication number:
**WO 2018/006690 (11.01.2018 Gazette 2018/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.07.2016   CN 201610523332**

(71) Applicants:
• **GD Midea Heating & Ventilating Equipment Co., Ltd.**
**Foshan Guangdong 528311 (CN)**

• **Midea Group Co., Ltd.**
**Foshan, Guangdong 528311 (CN)**

(72) Inventor: **LIU, Shuaishuai**
**Foshan**
**Guangdong 528311 (CN)**

(74) Representative: **Lam, Alvin**
**Maucher Jenkins**
**26 Caxton Street**
**London SW1H 0RJ (GB)**

(54) **HEATING CONTROL METHOD AND DEVICE, AND COMBINED HEATING SYSTEM**

(57)    A heating control method and device, and a combined heating system. The heating control method comprises: respectively calculating expenses needed for generating heat needed by a user by means of heat pump heating and combustor heating (S1); determining whether the calculated expense needed for heat pump heating is higher than or equal to the calculated expense needed for combustor heating (S2); if yes, turning on a combustor and turning off a heat pump (S3); and otherwise turning on the heat pump, and turn off the combustor (S4). By controlling the combined heating of a heat pump and a combustor, an energy-saving and money-saving heating manner easy to implement is provided to a user.

Fig. 1

**Description**

**CROSS-REFERENCE TO RELATED APPLICATIONS**

This application claims priority to and benefits of Chinese Patent Application No. 201610523332.7, titled with "HEATING CONTROL METHOD, DEVICE AND COMBINED HEATING SYSTEM", and filed on July 5, 2016 by GD MIDEA HEATING & VENTILATING EQUIPMENT CO., LTD. and MIDEA GROUP CO., LTD., the entire contents of which are incorporated herein by reference.

**FIELD**

The present disclosure relates to the field of heating technology, and more particularly, to a heating control method, a heating control device and a combination heating system.

**BACKGROUND**

With the continuous development of science and technology, there are more and more manners for heating the space. At present, two main heating manners are heating through the heat pump and heating through the burner. The heating through the heat pump (such as heating through an air-source heat pump) is increasingly favored by the market due to its advantages of environmental protection and energy saving. However, traditional heating through the burner (such as heating through a gas burner) still occupies a large proportion of heating market. For example, in the market, some families have both air-source heat pumps and gas burners. In this case, users are most concerned about heating manners at different ambient temperatures, so as to save energy and money.

**SUMMARY**

An objective of the present disclosure is to provide a heating control method, a heating control device and a combination heating system, for controlling the heat pump and the burner to operate to realize combination heating, such that energy and money can be saved by adopting different heating manners at different ambient temperatures.

In order to achieve the above objective, the present disclosure provides a heating control method, including: calculating an expense for generating heat required by a user through a heat pump, and an expense for generating the heat required by the user through a burner; determining whether the expense for generating the heat required through the heat pump is greater than or equal to the expense for generating the heat required through the burner; when the expense for generating the heat required through the heat pump is greater than or equal to the expense for generating the heat required through the burner, turning on the burner and turning off the heat pump, and when the expense for generating the heat required through the heat pump is less than the expense for generating the heat required through the burner, turning on the heat pump and turning off the burner.

In at least one embodiment, calculating the expense for generating the heat required by the user through the heat pump includes: obtaining a coefficient of performance (COP) of the heat pump at a corresponding ambient temperature and an electricity fee B corresponding to a heating time period; and calculating an expense $W1$ for generating the heat required by the user through the heat pump by $W1=A*B/COP/3600$, where A denotes the heat required by the user, and 3600 denotes a coefficient for converting time in hours into time in seconds.

In at least one embodiment, calculating the expense for generating the heat required by the user through the burner includes: obtaining a fuel heating value C of the burner, a coefficient of performance D at a corresponding ambient temperature and a fuel fee E corresponding to a heating time period; and calculating an expense $W2$ for generating the heat required by the user through the burner by $W2=A*E/C/D$, where A denotes the heat required by the user.

In at least one embodiment, the heat pump includes an air-source heat pump and/or a floor-heating pump.

In at least one embodiment, the burner includes a gas burner and/or an oil burner.

The present disclosure further provides a heating control device, including: a calculating module, configured to calculate an expense for generating heat required by a user through a heat pump, and an expense for generating the heat required by the user through a burner; a determining module, configured to determine whether the expense for generating the heat required through the heat pump is greater than or equal to the expense for generating the heat required through the burner; and an executing module, configured to turn on the burner and turn off the heat pump when the expense for generating the heat required through the heat pump is greater than or equal to the expense for generating the heat required through the burner, and turn on the heat pump and turn off the burner when the expense for generating the heat required through the heat pump is less than the expense for generating the heat required through the burner.

In at least one embodiment, the calculating module includes a first calculating sub module and a second calculating sub module.

The first calculating sub module is configured to calculate an expense W1 for generating the heat required by the user through the heat pump by:

$$W1 = A*B/COP/3600,$$

where A denotes the heat required by the user, COP denotes a coefficient of performance of the heat pump at a corresponding ambient temperature, B denotes an electricity fee corresponding to a heating time period, and 3600 denotes a coefficient for converting time in hours into time in seconds.

The second calculating sub module is configured to calculate an expense W2 for generating the heat required by the user through the burner by:

$$W2 = A*E/C/D,$$

where A denotes the heat required by the user, C denotes a fuel heating value of the burner, D denotes a coefficient of performance of the burner at a corresponding ambient temperature, and E denotes a fuel fee corresponding to a heating time period.

The present disclosure further provides a combination heating system, including: a heat pump configured for heating, a burner configured for heating, and the foregoing heating control device configured to control the heat pump and the burner to operate to realize combination heating.

In at least one embodiment, the heat pump includes an air-source heat pump and/or a floor-heating pump.

In at least one embodiment, the burner includes a gas burner and/or an oil burner.

The present disclosure further provides a device, including: one or more processor, a memory and one or more programs stored in the memory. When the one or more programs are executed by the one or more processors, implement following acts: calculating an expense for generating heat required by a user through a heat pump, and an expense for generating the heat required by the user through a burner; determining whether the expense for generating the heat required through the heat pump is greater than or equal to the expense for generating the heat required through the burner; when the expense for generating the heat required through the heat pump is greater than or equal to the expense for generating the heat required through the burner, turning on the burner and turning off the heat pump, and when the expense for generating the heat required through the heat pump is less than the expense for generating the heat required through the burner, turning on the heat pump and turning off the burner.

The present disclosure further provides a non-transitory computer storage medium storing one or more programs that, when executed by a device, causes the device to: calculate an expense for generating heat required by a user through a heat pump, and an expense for generating the heat required by the user through a burner; determine whether the expense for generating the heat required through the heat pump is greater than or equal to the expense for generating the heat required through the burner; and turn on the burner and turn off the heat pump when the expense for generating the heat required through the heat pump is greater than or equal to the expense for generating the heat required through the burner, and turn on the heat pump and turn off the burner when the expense for generating the heat required through the heat pump is less than the expense for generating the heat required through the burner.

With the above technical solution, the present disclosure may have following beneficial effects. The present disclosure can realize combination heating control of the heat pump and the burner, the control scheme is simple, thereby providing an energy-saving and cost-saving heating mode for users.

Other features and advantages of the present disclosure will be described in detail in subsequent embodiments.

## BRIEF DESCRIPTION OF THE DRAWINGS

The accompanying drawings, which are incorporated in and constitute a part of this specification, are provided for further understanding of the present disclosure, and together with following embodiments, intended to explain the present disclosure, but do not constitute a limitation on the present disclosure, in which:

Fig. 1 is a flow chart of a heating control method according to an embodiment of the present disclosure;
Fig. 2 is a flow chart of calculating an expense for generating heat required through a heat pump according to an embodiment of the present disclosure;
Fig. 3 is a flow chart of calculating an expense for generating heat required through a burner according to an embodiment of the present disclosure;
Fig. 4 is a block diagram of a heating control device according to an embodiment of the present disclosure;

Fig. 5 is a block diagram of a combination heating system according to an embodiment of the present disclosure.

Reference numerals:
41 calculating module      42 determining module
43 executing module       51 heat ump
52 burner                 53 heating control device

## DETAILED DESCRIPTION

Reference will be made in detail to embodiments of the present disclosure. It should be understood that, the embodiments described herein are intended to illustrate and explain the present disclosure, and are not construed to limit the present disclosure.

In embodiments of the present disclosure, terms such as "first" and "second" are used herein for purposes of description and are not intended to indicate or imply relative importance or significance or to imply the number of indicated technical features.

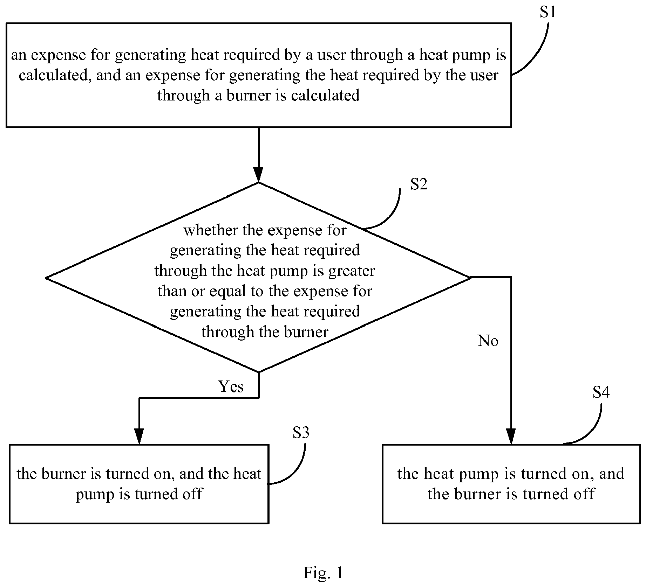

Embodiments of the present disclosure provide a heating control method, as illustrated in Fig. 1, the method may include following operations.

At block S1, an expense for generating heat required by a user through a heat pump is calculated, and an expense for generating the heat required by the user through a burner is calculated.

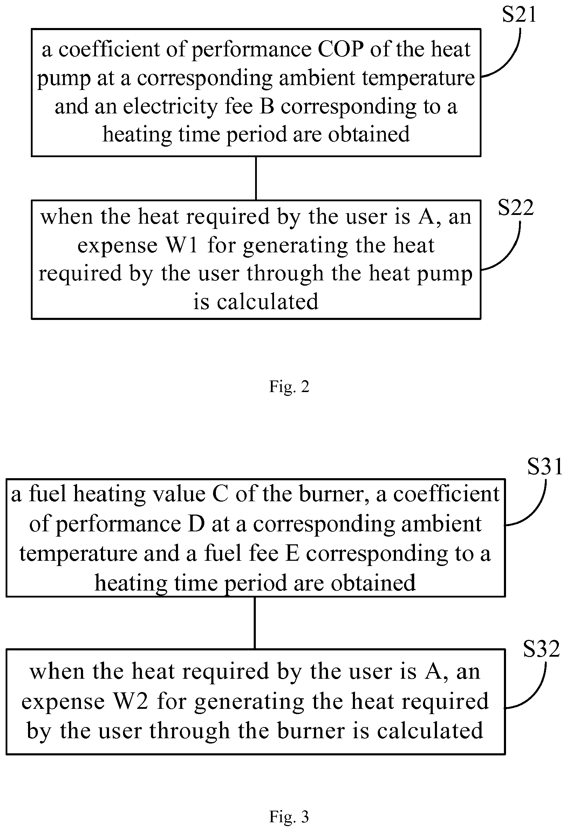

Furthermore, as illustrated in Fig. 2, calculating the expense for generating the heat required by the user through the heat pump may include following operations.

At block S21, a coefficient of performance COP of the heat pump at a corresponding ambient temperature and an electricity fee B corresponding to a heating time period are obtained.

The heat pump and the burner may have different conversion efficiencies (i.e., the coefficient of performance) at different ambient temperatures. In the embodiment, the heat pump may be an air-source heat pump and/or a floor-heating pump. By taking the air-source heat pump as an example, the coefficient of performance of the air-source heat pump at different ambient temperatures may be shown in Table 1.

| ambient temperature T / water temperature t | $T_1 \leqslant T < T_2$ | $T_2 \leqslant T < T_3$ | …… | $T_n \leqslant T < T_{n+1}$ |
|---|---|---|---|---|
| $t_1 \leqslant t < t_2$ | $COP_{11}$ | $COP_{12}$ | …… | $COP_{1n}$ |
| $t_2 \leqslant t < t_3$ | $COP_{21}$ | $COP_{22}$ | …… | $COP_{2n}$ |
| …… | …… | …… | …… | …… |
| $t_m \leqslant t < t_{m+1}$ | $COP_{m1}$ | $COP_{m2}$ | …… | $COP_{mn}$ |

Table 1

At block S22, when the heat required by the user is A, an expense W1 for generating the heat required by the user through the heat pump is calculated by a formula (1).

$$W1 = A*/COP/3600 \qquad (1)$$

In the formula (1), COP denotes the coefficient of performance, which may correspond to $COP_{mn}$ queried from table 1, A denotes the heat required by the user, the unit of A is kJ, and A can be set by the user, the unit of B is yuan/(kw*h), and 3600 denotes a coefficient for converting time in hours into time in seconds.

Furthermore, as illustrated in Fig. 3, calculating the expense for generating the heat required by the user through the burner may include following operations.

At block S31, a fuel heating value C of the burner, a coefficient of performance D at a corresponding ambient temperature and a fuel fee E corresponding to a heating time period are obtained.

In the embodiment, the burner includes a gas burner and/or an oil burner. By taking the gas burner as an example, the coefficient of performance of the gas burner at different ambient temperatures may be shown in Table 2.

| ambient temperature T / water temperature t | $T_1 \leqslant T < T_2$ | $T_2 \leqslant T < T_3$ | …… | $T_n \leqslant T < T_{n+1}$ |
|---|---|---|---|---|
| $t_1 \leqslant t < t_2$ | $D_{11}$ | $D_{12}$ | …… | $D_{1n}$ |
| $t_2 \leqslant t < t_3$ | $D_{21}$ | $D_{22}$ | …… | $D_{2n}$ |
| …… | …… | …… | …… | …… |
| $t_m \leqslant t < t_{m+1}$ | $D_{m1}$ | $D_{m2}$ | …… | $D_{mn}$ |

Table 2

At block S32, when the heat required by the user is A, an expense W2 for generating the heat required by the user through the burner is calculated by a formula (2).

$$W2=A*E/C/D \qquad (2)$$

In the formula (2), A denotes the heat required by the user, D denotes the coefficient of performance, which may correspond to $D_{mn}$ queried from table 2, C denotes a fuel heating value of the burner, the unit of C is kJ/m3, E denotes a fuel fee corresponding to a heating time period, and the unit of E is yuan/m$^3$.

In addition, it should be noted that, the coefficient of performance COP of the heat pump and the coefficient of performance D of the burner may be related to the device, and users can obtain data involved in Table 1 and Table 2 in advance by querying an instruction manual of the device. Furthermore, the electricity fee B and the fuel fee E may change according to market fluctuations in each period of time, and users can obtain it by querying relevant information in real time.

At block S2, it is determined whether the expense for generating the heat required through the heat pump is greater than or equal to the expense for generating the heat required through the burner.

Corresponding to the above formula (1) and (2), it can be determined whether W1 is greater than or equal to W2 by the following formula (3).

$$W1 \geq W2 \qquad (3)$$

At block S3, when the expense for generating the heat required through the heat pump is greater than or equal to the expense for generating the heat required through the burner, the burner is turned on, and the heat pump is turned off.

At block S4, when the expense for generating the heat required through the heat pump is less than the expense for generating the heat required through the burner, the heat pump is turned on, and the burner is turned off.

Thus, through block S3, based on the real-time calculation results, the heat pump or the burner having a lower expense may be turned on, and the heat pump or the burner having a higher expense may be turned off, thereby providing an energy-saving and money-saving heating mode for users.

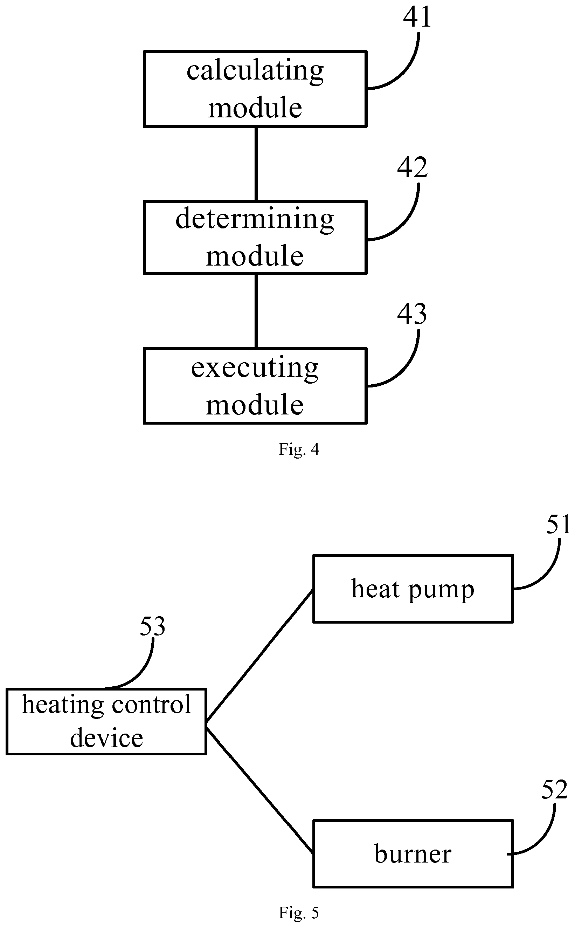

Based on the same idea as the above heating control method, the present disclosure further provides a heating control device. As illustrated in Fig. 4, the device includes a calculating module 41, a determining module 42 and an executing module 43. The calculating module 41 is configured to calculate an expense for generating heat required by a user through a heat pump, and an expense for generating the heat required by the user through a burner. The determining module 42 is configured to determine whether the expense for generating the heat required through the heat pump is greater than or equal to the expense for generating the heat required through the burner. The executing module 43 is configured to turn on the burner and turn off the heat pump when the expense for generating the heat required through the heat pump is greater than or equal to the expense for generating the heat required through the burner, and turn on the heat pump and turn off the burner when the expense for generating the heat required through the heat pump is less than the expense for generating the heat required through the burner.

Furthermore, the calculating module 41 may include a first calculating sub module and a second calculating sub module.

The first calculating sub module is configured to calculate an expense W1 for generating the heat required through the heat pump by the formula (1) when the heat required by the user is A.

The second calculating sub module is configured to calculate an expense W2 for generating the heat required through the burner by the formula (2) when the heat required by the user is A.

The determining module 42 may determine whether the expense for generating the heat required through the heat pump is greater than or equal to the expense for generating the heat required through the burner through the above formula (3).

In the embodiment, the coefficient of performance COP of the heat pump and the coefficient of performance D of the burner may be related to the device, and parameters thereof may be pre-stored in a database for the calculating module 41 to call. For example, the table 1 and table 2 may be pre-stored in a database or a storage device accessible by the calculating module 41 in a table form. The electricity fee B and the fuel fee E may change according to market fluctuations in each period of time, and users may manually input it to the calculating module 41.

The implementation details of the embodiment may be identical or similar to the heating control method described above, and details are not described herein again.

The present disclosure further provides a combination heating system. As illustrated in Fig. 5, the system includes a heat pump 51, a burner 52 and the heating control device 53 described in the above embodiments. The heat pump 51 is configured for heating, the burner 52 is configured for heating, and the heating control device 53 is configured to control the heat pump 51 and the burner 52 to operate to realize combination heating.

The heat pump 51 includes an air-source heat pump, or a floor-heating pump. The burner 52 includes a gas burner or an oil burner. The gas may be natural gas, city gas, biogas, liquefied gas, etc. The fuel may be diesel, engine oil, kerosene, etc. The heating control device 53 can wirelessly communicate with the heat pump 51 and the burner 52, to turn on or turn off the heat pump 51 or the burner 52 through the executing module 43 based on the result obtained by the calculating module 41 and the determining module 42, thereby realizing energy-saving and money-saving combination heating.

Here, the implementation details of the heating control device 53 may be identical or similar to that of the heating control device according to the above embodiments, and details are not described herein again.

In summary, the heating control method, the heating control device and the combination heating system according to embodiments of the present disclosure may provide an energy-saving and money-saving heating mode for users.

It would be understood by those skilled in the art that all or a part of the steps carried by the method in the above-described embodiments may be completed by relevant hardware instructed by a program. The program may be stored in a storage medium, and include instructions for causing a device (may be a microcontroller, chip, etc.) or a processor to perform all or part of the steps of the method described in various embodiments of the present disclosure. The foregoing storage medium may include: a U disk, a mobile hard disk, a read-only memory (ROM), a random access memory (RAM), a magnetic disk, or an optical disk, and the like.

The preferred embodiments of the present disclosure have been described in detail with reference to the accompanying drawings. However, the present disclosure is not limited to the specific details of the embodiments described above, and various modifications may be made to the technical solutions of the present disclosure within the scope of the technical idea of the present disclosure, and these simple modifications are within the scope of the disclosure.

It should be noted that, the technical features described in the above specific embodiments may be combined in any suitable manner without contradiction. In order to avoid unnecessary repetition, other various possible combinations of the present disclosure will not be further described.

In addition, the various embodiments of the present disclosure may also be arbitrarily combined, as long as they do not violate the ideas of the disclosure, they should also be regarded as the contents of the present disclosure.

**Claims**

1. A heating control method, comprising:

   calculating an expense for generating heat required by a user through a heat pump, and an expense for generating the heat required by the user through a burner;
   determining whether the expense for generating the heat required through the heat pump is greater than or equal to the expense for generating the heat required through the burner;
   when the expense for generating the heat required through the heat pump is greater than or equal to the expense for generating the heat required through the burner, turning on the burner and turning off the heat pump, and when the expense for generating the heat required through the heat pump is less than the expense for generating the heat required through the burner, turning on the heat pump and turning off the burner.

2. The method of claim 1, wherein calculating the expense for generating the heat required by the user through the heat pump comprises:

   obtaining a coefficient of performance (COP) of the heat pump at a corresponding ambient temperature and an electricity fee B corresponding to a heating time period; and
   calculating an expense W1 for generating the heat required by the user through the heat pump by:

   $$W1=A*B/COP/3600,$$

   where A denotes the heat required by the user, and 3600 denotes a coefficient for converting time in hours into time in seconds.

3. The method of claim 1, wherein calculating the expense for generating the heat required by the user through the burner comprises:

   obtaining a fuel heating value C of the burner, a coefficient of performance D at a corresponding ambient temperature and a fuel fee E corresponding to a heating time period; and
   calculating an expense W2 for generating the heat required by the user through the burner by:

   $$W2=A*E/C/D,$$

   where A denotes the heat required by the user.

4. The method of any one of claims 1 to 3, wherein the heat pump comprises an air-source heat pump and/or a floor-heating pump.

5. The method of any one of claims 1 to 3, wherein the burner comprises a gas burner and/or an oil burner.

6. A heating control device, comprising:

   a calculating module, configured to calculate an expense for generating heat required by a user through a heat pump, and an expense for generating the heat required by the user through a burner;
   a determining module, configured to determine whether the expense for generating the heat required through the heat pump is greater than or equal to the expense for generating the heat required through the burner; and
   an executing module, configured to turn on the burner and turn off the heat pump when the expense for generating the heat required through the heat pump is greater than or equal to the expense for generating the heat required through the burner, and turn on the heat pump and turn off the burner when the expense for generating the heat required through the heat pump is less than the expense for generating the heat required through the burner.

7. The device of claim 6, wherein the calculating module comprises:

   a first calculating sub module, configured to calculate an expense W1 for generating the heat required by the user through the heat pump by:

$$W1=A*B/COP/3600,$$

where A denotes the heat required by the user, COP denotes a coefficient of performance of the heat pump at a corresponding ambient temperature, B denotes an electricity fee corresponding to a heating time period, and 3600 denotes a coefficient for converting time in hours into time in seconds; and
a second calculating sub module, configured to calculate an expense W2 for generating the heat required by the user through the burner by:

$$W2=A*E/C/D,$$

where A denotes the heat required by the user, C denotes a fuel heating value of the burner, D denotes a coefficient of performance of the burner at a corresponding ambient temperature, and E denotes a fuel fee corresponding to a heating time period.

8. A combination heating system, comprising:

   a heat pump, configured for heating;
   a burner, configured for heating; and
   the heating control device according to claim 6 or 7, configured to control the heat pump and the burner to operate to realize combination heating.

9. The system of claim 8, wherein the heat pump comprises an air-source heat pump and/or a floor-heating pump.

10. The system of claim 8, wherein the burner comprises a gas burner and/or an oil burner.

11. A device, comprising:

    one or more processor;
    a memory; and
    one or more programs stored in the memory,
    wherein when the one or more programs are executed by the one or more processors, implement following acts:

    calculating an expense for generating heat required by a user through a heat pump, and an expense for generating the heat required by the user through a burner;
    determining whether the expense for generating the heat required through the heat pump is greater than or equal to the expense for generating the heat required through the burner;
    when the expense for generating the heat required through the heat pump is greater than or equal to the expense for generating the heat required through the burner, turning on the burner and turning off the heat pump, and when the expense for generating the heat required through the heat pump is less than the expense for generating the heat required through the burner, turning on the heat pump and turning off the burner.

12. A non-transitory computer storage medium storing one or more programs that, when executed by a device, causes the device to:

    calculate an expense for generating heat required by a user through a heat pump, and an expense for generating the heat required by the user through a burner;
    determine whether the expense for generating the heat required through the heat pump is greater than or equal to the expense for generating the heat required through the burner;
    turn on the burner and turn off the heat pump when the expense for generating the heat required through the heat pump is greater than or equal to the expense for generating the heat required through the burner, and turn on the heat pump and turn off the burner when the expense for generating the heat required through the heat pump is less than the expense for generating the heat required through the burner.

an expense for generating heat required by a user through a heat pump is calculated, and an expense for generating the heat required by the user through a burner is calculated — S1

whether the expense for generating the heat required through the heat pump is greater than or equal to the expense for generating the heat required through the burner — S2

Yes

No

the burner is turned on, and the heat pump is turned off — S3

the heat pump is turned on, and the burner is turned off — S4

Fig. 1

S21

a coefficient of performance COP of the heat pump at a corresponding ambient temperature and an electricity fee B corresponding to a heating time period are obtained

S22

when the heat required by the user is A, an expense W1 for generating the heat required by the user through the heat pump is calculated

Fig. 2

S31

a fuel heating value C of the burner, a coefficient of performance D at a corresponding ambient temperature and a fuel fee E corresponding to a heating time period are obtained

S32

when the heat required by the user is A, an expense W2 for generating the heat required by the user through the burner is calculated

Fig. 3

41

calculating module

42 determining module

43

executing module

Fig. 4

51

heat pump

53

heating control device

52

burner

Fig. 5

# INTERNATIONAL SEARCH REPORT

| International application No. |
| --- |
| **PCT/CN2017/088311** |

**A.   CLASSIFICATION OF SUBJECT MATTER**

F24D 19/10 (2006.01) i; F24D 12/02 (2006.01) i; F24D 17/02 (2006.01) i

According to International Patent Classification (IPC) or to both national classification and IPC

**B.   FIELDS SEARCHED**

Minimum documentation searched (classification system followed by classification symbols)

F24D; F24F

Documentation searched other than minimum documentation to the extent that such documents are included in the fields searched

Electronic data base consulted during the international search (name of data base and, where practicable, search terms used)

CNABS, SIPOABS, CNKI, CNTXT, VEN: heat supply, multi-heat-source, multi-source, hybrid heat source, heat pump, fuel oil, heat+, control+, multi heat+ source, hybrid heat+ source, combin+ heat+ source, heat pump, gas, oil, fee, cost

**C.   DOCUMENTS CONSIDERED TO BE RELEVANT**

| Category* | Citation of document, with indication, where appropriate, of the relevant passages | Relevant to claim No. |
| --- | --- | --- |
| X | US 2012029725 A1 (GENERAL ELECTRIC CO), 02 February 2012 (02.02.2012), description, paragraphs [0005]-[0032], and figures 1-2B | 1-12 |
| X | US 9127866 B2 (PHOEBUS ENERGY LTD.), 08 September 2015 (08.09.2015), description, paragraphs [0062]-[0172], and figures 1-5 | 1-12 |
| X | CN 103443549 A (TRANE INTERNATIONAL INC.), 11 December 2013 (11.12.2013), description, paragraphs [0011]-[0034], and figures 1-4J | 1-12 |
| PX | CN 105940273 A (DAIKIN INDUSTRIES. LTD.), 14 September 2016 (14.09.2016), description, paragraphs [0035]-[0096], and figures 1-12 | 1-12 |
| PX | CN 106123106 A (GUANGDONG MIDEA HEATING & VENTILATION EQUIPMENT CO., LTD. et al.), 16 November 2016 (16.11.2016), description, paragraphs [0036]-[0072], and figures 1-5 | 1-12 |
| A | EP 2857760 A1 (ELECTRICITÉ DE FRANCE), 08 April 2015 (08.04.2015), the whole document | 1-12 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 July 2017 (14.07.2017) | **29 August 2017 (29.08.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YANG, Xiuhua** Telephone No.: (86-10) **62084899** |
| --- | --- |

Form PCT/ISA/210 (second sheet) (July 2009)

## INTERNATIONAL SEARCH REPORT
### Information on patent family members

| International application No. |
|---|
| **PCT/CN2017/088311** |

| Patent Documents referred in the Report | Publication Date | Patent Family | Publication Date |
|---|---|---|---|
| US 2012029725 A1 | 02 February 2012 | CA 2762189 A1 | 16 June 2012 |
| US 9127866 B2 | 08 September 2015 | US 2014102124 A1 | 17 April 2014 |
| CN 103443549 A | 11 December 2013 | WO 2012134668 A2 | 04 October 2012 |
| | | WO 2012134668 A3 | 01 August 2013 |
| | | CA 2830188 A1 | 04 October 2012 |
| | | CN 103443549 B | 31 May 2017 |
| | | US 2012248212 A1 | 04 October 2012 |
| CN 105940273 A | 14 September 2016 | JP 2015145759 A | 13 August 2015 |
| | | JP 5858062 B2 | 10 February 2016 |
| | | US 2016341434 A1 | 24 November 2016 |
| | | EP 3096091 A4 | 05 April 2017 |
| | | EP 3096091 A1 | 23 November 2016 |
| | | WO 2015115404 A1 | 06 August 2015 |
| CN 106123106 A | 16 November 2016 | None | |
| EP 2857760 A1 | 08 April 2015 | FR 3011622 B1 | 18 December 2015 |
| | | FR 3011622 A1 | 10 April 2015 |
| | | EP 2857760 B1 | 05 October 2016 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610523332